# EUROPÄISCHE PATENTSCHRIFT

(11) **EP 2 768 715 B1**
(45) Veröffentlichungstag und Bekanntmachung des Hinweises auf die Patenterteilung: **29.07.2015**
(21) Anmeldenummer: 12756374.0
(22) Anmeldetag: 06.09.2012
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 19.10.2011 DE 102011054595; 20.12.2011 DE 102011056674
(43) Veröffentlichungstag der Anmeldung: 27.08.2014
(73) Patentinhaber: ThyssenKrupp Presta Aktiengesellschaft, 9492 Eschen (LI)
(72) Erfinder: SCHNITZER, Rony, 9487 Gamprin (LI)
(74) Vertreter: Fechner, Thomas
(86) Internationale Anmeldenummer: PCT/EP2012/003739
(87) Internationale Veröffentlichungsnummer: WO 2013/056766

(56) Entgegenhaltungen:
- WO-A1-2009/121386
- FR-A1- 2 729 361

## Beschreibung

Die vorliegende Erfindung betrifft eine Lenksäule für ein Kraftfahrzeug mit einem, zur Befestigung der Lenksäule an einer Karosserie des Kraftfahrzeugs vorgesehenen Konsolenteil und einer, zwischen zumindest zwei Seitenwangen des Konsolenteils gelagerten Lenkspindellagereinheit zur drehbaren Lagerung einer Lenkspindel der Lenksäule, wobei zwischen den Seitenwangen des Konsolenteils und der Lenkspindellagereinheit ein Lagerteil angeordnet ist und ein Spannbolzen der Lenksäule die Seitenwangen des Konsolenteils und das Lagerteil und die Lenkspindellagereinheit durchdringt und das Lagerteil zumindest eine Lagerteilsicke und die Lenkspindellagereinheit zumindest eine Lenkspindellagereinheitsicke aufweist und die Lagerteilsicke zumindest bereichsweise flächig an der Lenkspindellagereinheitsicke anliegt.

Gattungsgemäße Lenksäulen sind beim Stand der Technik bekannt. Der Aufbau aus Konsolenteil, Lenkspindellagereinheit und dazwischen angeordnetem Lagerteil wird häufig bei sogenannten verstellbaren Lenksäulen eingesetzt, welche eine Anpassung der Position des Lenkrads an den jeweiligen Fahrzeuglenker ermöglichen.

Gattungsgemäße Lenksäulen sind z.B. aus der WO 2009/121386 A1 und der US7918483 bekannt. Ausgehend von diesem Stand der Technik ist es Aufgabe der vorliegenden Erfindung, eine einfache und preiswerte gattungsgemäße Lenksäule bereitzustellen, bei der man mit niedrigen Kosten hohen Anforderungen an die Steifigkeit und/oder Eigenfrequenz gerecht wird.

Erfindungsgemäß wird dies durch eine Lenksäule gemäß Patentanspruch 1 erreicht.

Es ist somit vorgesehen, dass der Spannbolzen das Lagerteil in der Lagerteilsicke und die Lenkspindellagereinheit in der Lenkspindellagereinheitsicke durchdringt.

Die erfindungsgemäße Lenksäule kann mit Vorteil in ihrer Höhe, gleichbedeutend mit ihrer Neigung, und/oder in ihrer Länge einstellbar ausgebildet sein. Bevorzugt sind allgemein kostengünstige höhen- und längenverstellbare Lenksäulen, die eine Feststelleinrichtung umfassen, das die wahlweise Freigabe (= geöffneter Zustand der Feststelleinrichtung) oder Fixierung (=geschlossener Zustand der Feststelleinrichtung) der jeweiligen Verstellungsrichtung ermöglicht. Der Spannbolzen, als Teil einer derartigen Feststelleinrichtung, im Verbund mit weiteren Spannteilen, wie beispielsweise einem Klemmstück, einer Nockenplatte, einer Spannmutter, kann dabei in einfacher Weise zur wahlweisen Freigabe oder Fixierung der je nach Ausführung möglichen Verstellung in Längsrichtungen und/oder Höhenrichtung in bekannter Weise dienen. Unabhängig von einer formschlüssigen oder kraftschlüssigen (auch reibschlüssigen) Fixierung, ist es stets günstig, wenn hohe Presskräfte im geschlossenen Zustand der Feststelleinrichtung auf die Verbindungen zwischen Lenkspindellagereinheit und Lagerteil einerseits und Lagerteil und Konsolenteil andererseits aufgebracht sind.

Durch das Durchdringen von Lenkspindellagereinheitsicke und Lagerteilsicke mittels des Spannbolzens werden die vom Spannbolzen ausgeübten Klemmkräfte direkt auf die beiden genannten Sicken übertragen, sodass mit einer einfachen Konstruktion große Kräfte übertragen werden können und eine hohe Steifigkeit erreicht ist. Die Steifigkeit kann dabei weiter erhöht werden, wenn das Lagerteil und die Lenkspindellagereinheit, an den parallel zu den beiden Seitenwangen ausgerichteten Oberfläche, beidseits der Lenkspindel jeweils korrespondierend eine Lenkspindellagereinheitsicke und eine Lagerteilsicke aufweisen, die von einem Spannbolzen durchsetzt sind. Dies hilft auch, die Anzahl der Bauteile und/oder den Materialeinsatz zur Darstellung der Lenksäule zu verringern. Im geöffneten Zustand, in dem über den Spannbolzen keine oder nur geringfügige Klemmkräfte übertragen werden, wird durch die erfindungsgemäße Anordnung ohne großen Aufwand ein spielarmes Führungssystem erreicht. Dem Lenker des Kraftfahrzeuges wird somit auch in diesem Zustand ein stabiles und sattes Gefühl beim Anfassen des an der Lenkspindel der Lenksäule befestigten Lenkrades gegeben.

Die Lagerteilsicke und die Lenkspindellagereinheitsicke werden günstigerweise zueinander korrespondierend ausgebildet. In diesem Sinne ist bevorzugt auch vorgesehen, dass die Lagerteilsicke in einer Schnittebene durch eine Längsmittelachse des Spannbolzens gesehen, geometrisch ähnlich zur Lenkspindellagereinheitsicke ausgebildet ist. Weiters ist es auch günstig, wenn die Lagerteilsicke und/oder die Lenkspindellagereinheitsicke in sich achsensymmetrisch bezüglich einer Längsmittelachse des Spannbolzens ausgebildet ist bzw. sind. Dabei ist es denkbar und möglich, die Lagerteilsicke als zwei oder mehrere abschnittsweise unterbrochene Sickenabschnitte auszubilden, die in die Lenkspindellagereinheitssicke eingreifen.

Günstig ist es, wenn die genannten Sicken jeweils mit ihren Seitenwänden, vorzugsweise paarweise, aneinander anliegen. Um in Achsrichtung aber besonders hohe Klemmkräfte übertragen zu können, sehen bevorzugte Ausgestaltungsformen der Erfindung vor, dass die Lagerteilsicke und die Lenkspindellagereinheitsicke jeweils Seitenwände und jeweils einen die Seitenwände miteinander verbindenden Sickengrund aufweisen. Besonders vorteilhaft ist die Ausbildung von Seitenwänden in den jeweiligen Sicken, die im Bereich von 30° bis 60°, bevorzugt 45° bis 60° geneigt sind, gegenüber dem Sickengrund. Im geschlossenen Zustand der Feststelleinrichtung liegen die Lagerteilsicke und die Lenkspindellagereinheitsicke mit ihren jeweiligen Seitenwänden , vorzugsweise paarweise, mit Vorspannung aneinander an. Der Spannbolzen ist günstigerweise jeweils durch eine Öffnung im jeweiligen Sickengrund hindurchgeführt.

Die Ausbildung des Sickengrundes, sowohl in der Lagerteilsicke als auch in der Lenkspindellagereinheitsicke, die parallel, oder zumindest nahezu parallel, zueinander ausgerichtet sind, ermöglicht den Ausgleich von Toleranzen bei gleichzeitiger Erhöhung der Kontaktspannung im Kontakt zwischen den Seitenwänden der beiden Sicken. In diesem Fall berühren sich die beiden Sickengründe im geschlossenen Zustand der Feststelleinrichtung nicht. Alternativ ist es jedoch denkbar und möglich unter Einschränkung der Toleranz, diesen Kontakt zwischen den jeweiligen Sickengründen gerade vorzusehen, wobei ebenfalls auf den Kontakt zwischen den Seitenwänden eine erhebliche Presskraftsteigerung ermöglicht wird.

Die Ausbildung des zusätzlichen Lagerteils bietet bei der Darstellung der Lenksäule eine Reihe von Vorteilen. Mit einer einfachen Gleichteilstrategie wird es möglich, sowohl nicht verstellbare als auch nur längenverstellbare oder auch alternativ nur höhenverstellbare oder längenverstellbare und höhenverstellbare Lenksäulen darzustellen. Hierbei muss jeweils nur das Lagerteil variiert werden. Gleichzeitig wird es möglich, verschiedene Lenksäulen mit unterschiedlichen Baulängen, bzw. einem unterschiedlichen Abstand der Befestigungspunkte im Fahrzeug, in einer Gleichteilstrategie darzustellen. Auch ist es bei Nutzung einer Vielzahl von Gleichteilen möglich, eine Lenksäule mit einer elektrischen Hilfskrafteinrichtung zur Bereitstellung einer Unterstützungskraft und/oder einer Hilfslenkwinkels, mit der erfindungsgemäßen Lehre darzustellen. Es genügt, das Lagerteil, den Erfordernissen anzupassen. Überraschenderweise konnte mit Hilfe der erfindungsgemäßen Lehre eine Lenksäule, die die Lenkspindellagereinheit, die Konsolenteil und das Lagerteil umfasst, dargestellt werden, die den hohen Steifigkeitsanforderungen genügt.

Für den Fall, dass die Lenksäule nur in Längenrichtung verstellbar ist, kann es zusätzlich vorgesehen sein, auch in einer, bevorzugt beiden, Seitenwangen des Konsolenteils eine zu den Sicken in der Lenkspindellagereinheit und der Sicke im Lagerteil korrespondierende Sicke, die Konsolenteilsicke bzw. Konsolenteilsicken, vorzusehen. Auch diese Sicke umfasst mit Vorteil Seitenwände. Die oben genannten Ausführungen betreffend dem Zusammenwirken und der geometrischen Gestaltung der Sicken sind auch auf die eine oder die zwei Konsolenteilsicken analog anwendbar.

Durch das Hindurchführen des Spannbolzens durch die Lagerteilsicke, die Lenkspindellagereinheitsicke und gegebenenfalls auch die Konsolenteilsicke kann eine äußerst kompakte Bauweise erreicht werden. Weiters kann durch die erfindungsgemäße Maßnahme der Spannbolzen sehr nah an der Lenkspindellagereinheit und insbesondere an der darin drehbar gelagerten Lenkspindel angeordnet werden. Durch die Ausbildung der Sicken in der Lenkspindellagereinheit wird es möglich, die Lenkspindellagereinheit derart auszuführen, dass zwischen dem Spannbolzen und der Lenkspindel keine Zwischenwand erforderlich ist. Dies führt zu einer gleichermaßen kompakten wie auch stabilen Bauweise. Außerdem wirken die über den Spannbolzen übertragenen Kräfte sehr unmittelbar auf die genannten Sicken ein.

Günstigerweise ist vorgesehen, dass der Bolzen die Lagerteilsicke und die Lenkspindellagereinheitsicke sowie die gegebenenfalls vorhandene Konsolenteilsicke mittig durchdringt, was für eine symmetrische, auf alle Seitenwände der jeweiligen Sicken verteilte Krafteinleitung weiters günstig ist. Der Sickengrund ist günstigerweise so breit ausgeführt, dass der Spannbolzen vollständig durch eine Öffnung im Sickengrund hindurchgeführt werden kann. Weiters kann der Sickengrund seitlich zu den genannten Öffnungen auch noch Bereiche aufweisen, mit denen er an den Sickengründen der anderen Sicken abgestützt ist. Die genannten Öffnungen bzw. Aussparungen in den Sicken bzw. Sickengründen, durch die der Spannbolzen durchgeführt ist, sollten günstigerweise größer als der Durchmesser des Spannbolzens sein, sodass der Spannbolzen nicht direkt an den Rändern der genannten Öffnungen bzw. Aussparungen anliegt. Dies hat den Vorteil, dass bei einer Verstellung der Spannbolzen nicht direkt in Kontakt mit dem Rand der genannten Öffnungen bzw. Aussparungen steht und dass im Falle eines Fahrzeugcrash keine Rotationsbewegung des Spannbolzens ausgelöst wird.

Der Vollständigkeit halber wird darauf hingewiesen, dass es sich bei der Lenkspindellagereinheitsicke um eine Sicke in der Lenkspindellagereinheit, bei der Lagerteilsicke entsprechend um eine Sicke im Lagerteil und bei der Konsolenteilsicke wiederum entsprechend um eine Sicke in dem Konsolenteil handelt. Eine Sicke ist, wie allgemein bekannt, eine rinnenförmige Vertiefung bzw. Kehlung. Geometrisch ähnlich sind zwei Sicken, wenn sie sich durch eine Ähnlichkeitsabbildung, d.h. eine geometrische Abbildung die sich aus zentrischen Streckungen und Kongruenzabbildung wie Verschiebung, Drehung, Spiegelung zusammensetzen lässt, in einander übergeführt werden können.

Im Sinne der Erfindung ist es denkbar und möglich, die Sicken als sogenannte Innensicken oder auch als Außensicken auszubilden. Bevorzugt sind die genannten Sicken als sogenannte Innensicken ausgebildet, da in diesem Fall eine einfachere Konstruktion zu einer entsprechend stabilen Lenksäule führt. Als Innensicke ist im Sinne der Erfindung besonders bevorzugt eine Sicke zu verstehen, deren Boden etwa senkrecht zur Ebene der Seitenwangen in Richtung zur Lenkspindel hin vertieft ist, wobei der Boden im wesentlichen parallel zur Ebene der Seitenwangen verläuft. Hierdurch wird eine kompakte Bauweise erreicht. Zusätzlich können auch hohe Kräfte übertragen werden. In diesem Sinne ist es somit günstig, wenn die Lagerteilsicke und die Lenkspindellagereinheitsicke und soweit vorhanden auch die Konsolenteilsicke als in Richtung in den Bereich zwischen den Seitenwangen des Konsolenteils hinein vertiefte Sicken ausgebildet sind. Im Sinne einer günstigen und möglichst effektiven Kraftübertragung sehen bevorzugte Varianten weiters vor, dass die Lagerteilsicke auf zwei einander gegenüberliegenden Seiten des Spannbolzens zumindest bereichsweise flächig, oder alternativ zumindest bereichsweise linienförmig, an der Lenkspindellagereinheitsicke anliegt. Im Sinne einer spielfreien Führung und der Möglichkeit auch im Crashfall hohe Kräfte aufnehmen zu können, sehen besonders bevorzugte Ausgestaltungsformen der Erfindung vor, dass die Lagerteilsicke und/oder die Lenkspindellagereinheitsicke und/oder die gegebenenfalls vorhandene Konsolenteilsicke längserstreckt ausgebildet ist bzw. sind. Hierdurch wird eine besonders große Führungslänge geschaffen, die eine vorteilhafte Kraftabstützung bei Drehmomentbelastung bewirkt, wie sie beispielsweise im Crashfall auftritt.

Bevorzugt ist vorgesehen, dass die Seitenwangen des Konsolenteils jeweils zumindest eine Konsolenteilsicke aufweisen und der Spannbolzen die Seitenwangen in der Konsolenteilsicke durchdringt und die Konsolenteilsicke, vorzugsweise auf zwei einander gegenüberliegenden Seiten des Spannbolzens, zumindest bereichsweise flächig an der Lagerteilsicke anliegt.

Weiters ist es günstig, wenn die Lagerteilsicke und die Lenkspindellagereinheitsicke und soweit vorhanden auch die Konsolenteilsicke jeweils Seitenwände und jeweils einen die Seitenwände miteinander verbindenden Sickengrund aufweisen, wobei die Lagerteilsicke und die Lenkspindellagereinheitsicke und soweit vorhanden auch die Konsolenteilsicke mit den Seitenwänden, vorzugsweise paarweise, aneinander anliegen, vorzugsweise zumindest im geschlossenen Zustand einer Feststelleinrichtung der Lenksäule, mit der die Lenkspindellagereinheit in ihrer Position gegenüber dem Konsolenteil fixiert ist.

Besonders bevorzugte Ausgestaltungsformen der Erfindung sehen vor, dass das Lagerteil einstückig z.B. aus einem gebogenen, vorzugsweise U-förmig gebogenen, Blechstreifen gebildet ist. Dieser kann zwei Lagerteilschenkel, in denen jeweils eine Lagerteilsicke ausgebildet ist, und einen Lagerteilboden umfassen, wobei der Lagerteilboden vorzugsweise in Richtung der Vorderseite der Lenksäule ausgerichtet ist. Das offene Ende des U-förmigen Teils ist vorzugsweise in Richtung des Lenkradanschlusses der Lenksäule ausgerichtet. Im Querschnitt zur Längsachse der Lenkspindel gesehen wird mit Vorteil die Lenkspindellagereinheit an den zwei Seiten, die etwa parallel zu den Seitenwangen der Konsoleneinheit verlaufen, zwischen den Lagerteilschenkeln umgriffen. Durch die erfindungsgemäße Sickenkonstruktion kann auf eine außerhalb der Lagerteilsicken zusätzliche Abstützung der Lenkspindellagereinheit in dem Lagerteil, beispielsweise durch eine Fläche, die unter einem Winkel gegenüber den Seitenwangen geneigt an den Lagerteilschenkeln angeordnet ist, verzichtet werden. Dadurch kann das Gewicht der Lenksäule reduziert werden und Material eingespart werden. Weiterhin wird es dadurch möglich, dass an der Lenkspindellagereinheit angebrachte Zusatzelemente, wie beispielsweise eine Wegfahrsperre, am Lagerteil vorbei geführt werden können. Dies ist insbesondere beim Crash von Vorteil. Im Sinne einer stabilen Lagerung weist das Lagerteil zumindest zwei voneinander entfernte Befestigungsstellen auf, an denen es direkt oder indirekt an einer Halterung der Karosserie des Kraftfahrzeugs befestigt werden kann. In diesem Sinne sieht eine bevorzugte Ausgestaltungsform der Erfindung vor, dass das Lagerteil an zumindest einem, vom Spannbolzen distanzierten Ort eine fixe oder ein Schwenkgelenk bildende Lagerteilbefestigung zur Befestigung des Lagerteils an der Karosserie des Fahrzeugs oder am Konsolenteil aufweist. Die Lagerteilbefestigung kann dabei verstärkt bzw. versteift ausgeführt sein. Mit Vorteil ist die Lagerteilbefestigung in der Nähe des Lagerteilbodens angeordnet. Der Spannbolzen durchsetzt die Lagerteilschenkel mit Vorteil in der Nähe des offenen Endes des U-förmigen Teils. Im Sinne einer möglichst stabilen, spielfreien Lagerung ist es günstig, wenn die Entfernung zwischen Spannbolzen und Lagerteilbefestigung zumindest der halben, vorzugsweise zumindest dreiviertel der, Länge des Lagerteils entspricht.

Mit Vorteil ist das Lagerteil dadurch gekennzeichnet, dass das Lagerteil genau zwei Lagerteilschenkel aufweist, welche mittels einer Lagerteilschenkelverbindung miteinander verbunden und in einer Richtung parallel zur Längserstreckung der Lenkspindel längserstreckt sind, wobei die Lenkspindellagereinheit zwischen den Lagerteilschenkeln angeordnet ist. Auf diese Weise ist mit Vorteil die Lenkspindellagereinheit im Querschnitt zur Mittellängsachse gesehen genau an zwei Seiten vom Lagerteil umschlossen. Dabei ist mit Vorteil im Lagerteil in einer Betriebsstellung der Lenksäule gesehen, in der Vertikalrichtung die Erstreckung der Lagerteilschenkel geringer als die Erstreckung der Lenkspindellagereinheit. Mit Vorteil ist das Lagerteil dadurch gekennzeichnet, dass das Lagerteil vorzugsweise eine durch die Lagerteilschenkel und die Lagerteilschenkelverbindung ausgebildete U-Form aufweist. Dabei ist das Lagerteil mit Vorteil dadurch gekennzeichnet, dass vorzugsweise in zumindest einem der, vorzugsweise in jedem, Lagerteilschenkel eine der Lagerteilsicken angeordnet ist.

Die Lagerteilschenkelverbindung kann auch weitere Funktionen übernehmen oder durch Bauteile oder Baugruppen gebildet sein, die zur Darstellung weiterer Funktionen im Lenksystem vorhanden sind.

Bevorzugte Varianten der Erfindung sind als sogenannte verstellbare Lenksäulen ausgeführt. So kann vorgesehen sein, dass das Lagerteil zur Bereitstellung einer Höhenverstellbarkeit der Lenksäule schwenkbar gelagert ist. Weiters kann vorgesehen sein, dass die Lenkspindellagereinheit zur Bereitstellung einer Längsverstellbarkeit der Lenksäule in Längsrichtung der Lenkspindel verschiebbar im Lagerteil gelagert ist. Besonders bevorzugte Ausgestaltungsformen von erfindungsgemäßen Lenksäulen sind sowohl höhenverstellbar als auch längsverstellbar. Sie weisen somit eine Kombination der zuletzt genannten Merkmale auf. Der Vollständigkeit halber wird aber darauf hingewiesen, dass es sich bei erfindungsgemäßen Lenksäulen auch um sogenannte starre Lenksäulen handeln kann, welche keine der genannten Verstellmöglichkeiten aufweisen. Hier kann der Spannbolzen einfach eine Montagefunktion übernehmen.

Es ist auch zu berücksichtigen, dass die erfindungsgemäßen Merkmale der Lenksäule nicht nur dazu eingesetzt werden können, um eine möglichst spielarm verstellbare Lenksäule zu schaffen. Vielmehr kann das Durchdringen der genannten Sicken durch den Spannbolzen auch dazu genutzt werden, eine Energieabsorptionseinrichtung für die genannte starre oder aber auch verstellbare Lenksäule zu schaffen, indem die genannten Sicken als an sich bekannte, sich im Crashfall umformende Crashsicken ausgeführt sind. Durch die Ausgestaltung der Sicken kann im Crashfall zum Energieabbau ein Durchrutschen über die Sickenführung ermöglicht werden. Bei verstellbaren Lenksäulen, bei denen die genannten Sicken zusätzlich auch als Crashsicken ausgebildet sind, befinden sich die für die Energieumwandlung im Falle eines Crashs relevanten Bereiche der Sicken günstigerweise am Ende der Verstellwege für die Lenksäulenverstellung.

In einfacher Weise kann die Form der Sicke so gestaltet sein, dass Endanschläge zur Begrenzung des Bereichs der Verstellung ausgebildet sind. Dies kann in einfacher Weise durch umgebogene Laschen oder verringerte Tiefen der Lenkspindellagereinheitssicke oder noppenartige Vorsprünge oder Zusatzelemente in einer der Sicken erreicht werden.

Weitere Merkmale und Einzelheiten bevorzugter Ausgestaltungsformen der Erfindung werden anhand der nachfolgenden Figurenbeschreibung dargelegt. Es zeigen:
Fig. 1 und 2 ein erstes erfindungsgemäßes Ausführungsbeispiel in Form einer längsverstellbaren Lenksäule;
Fig. 3 eine leicht abgewandelte Ausführungsform des ersten Ausführungsbeispiels;
Fig. 4 und 5 eine weitere, erfindungsgemäß ausgebildete Lenksäule, welche höhen- und längenverstellbar ist;
Fig. 6 und 7 zwei verschiedene Abwandlungsformen dieses weiteren erfindungsgemäßen Ausführungsbeispiels gemäß der Fig. 4 und 5;
Fig. 8 den Teilbereich A aus Fig. 2 in vergrößerter Darstellung;
Fig. 9 Teilbereich B aus Fig. 5;
Fig. 10 Ausführungsform der Erfindung, wobei die Lenksäule eine Hilfskraftunterstützung aufweist.

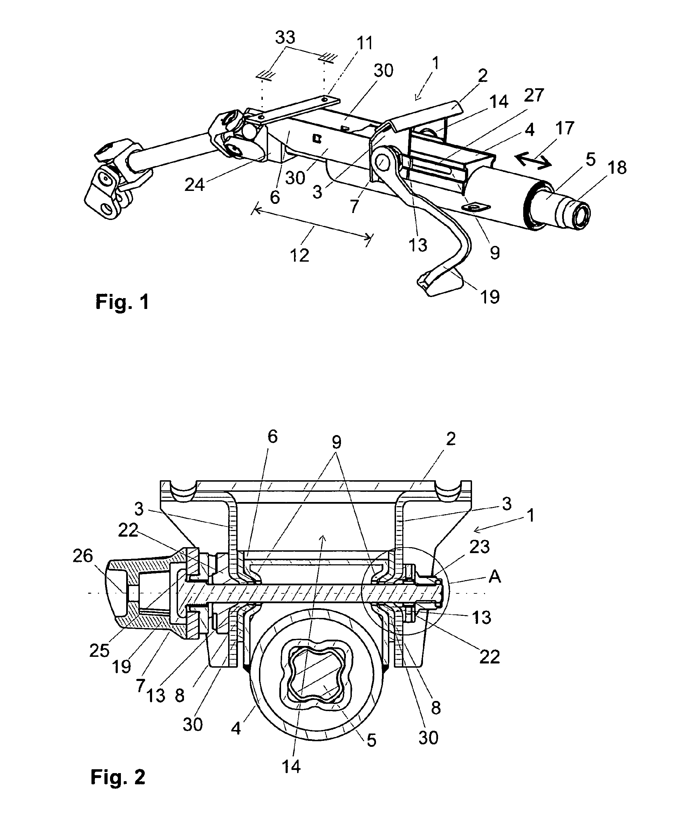

In Fig. 1 ist eine erste erfindungsgemäße Lenksäule 1 dargestellt. Mittels des Konsolenteils 2 kann diese an Halterungen 33 einer Karosserie eines hier nicht dargestellten Fahrzeugs befestigt werden. Fig. 2 zeigt einen Vertikalschnitt durch diese Lenksäule 1 entlang des Spannbolzens 7. Insbesondere in Fig. 2 ist gut zu sehen, dass das Konsolenteil 2 zwei Seitenwangen 3 aufweist, zwischen denen die Lenkspindellagereinheit 4 gehalten ist. In der Lenkspindellagereinheit 4 ist die Lenkspindel 5 drehbar gelagert. Der Lenkradanschluss 18 der Lenkspindel 5 ist zur Befestigung eines hier nicht dargestellten Lenkrades an der Lenkspindel 5 vorgesehen. Zwischen den Seitenwangen 3 und der Lenkspindellagereinheit 4 befinden sich Lagerteilschenkel 30 des Lagerteils 6. Am vom Spannbolzen 7 abgewandten Ende ist das Lagerteil 6 mittels der Lagerteilbefestigung 11, im gezeigten Ausführungsbeispiel an einer Halterung 33 der hier nicht dargestellten Karosserie des Kraftfahrzeugs befestigbar. Es sind auch Ausgestaltungsformen denkbar, bei denen die Lagerteilbefestigung 11 an dem Konsolenteil 2 befestigt wird. Im gezeigten Ausführungsbeispiel ist die Lagerteilbefestigung 11 jedenfalls starr ausgeführt. Die Länge des Lagerteils 6 ist in der Zeichnung mit dem Bezugszeichen 12 versehen. Wie bereits eingangs erläutert, ist es günstig, wenn die Lagerteilbefestigung 11 möglichst weit von dem Spannbolzen 7 entfernt ist. Hierzu sollte, wie bereits ausgeführt, die Entfernung zwischen Spannbolzen 7 und Lagerteilbefestigung 11 zumindest die Hälfte, vorzugsweise zumindest Dreiviertel, der Länge 12 des Lagerteils 6 betragen.

Beim gezeigten Ausführungsbeispiel gemäß der Fig. 1 und 2 handelt es sich um eine längenverstellbare Lenksäule 1. Die Verstellrichtungen sind mit dem Doppelpfeil 17 gekennzeichnet. Dies entspricht der Längsrichtung der Lenkspindel 5.

Im gezeigten Ausführungsbeispiel ist die hier teleskopierbare Lenkspindel 5 im vorderen Bereich in der Nähe der Lagerteilbefestigung in einem Lenkspindellager 24 drehbar gelagert. Je nach Ausführung kann aber auf ein derartiges Lenkspindellager 24 verzichtet werden. Zur Veranschaulichung sind derartige Lager in den Figuren 1, 3 und 7 dargestellt. Wie anhand der Figuren deutlich wird, ist der Einsatz dieses Lenkspindellagers 24 unabhängig von der Ausbildung weiterer Varianten möglich. Um einerseits die Verstellung in Längsrichtung 17 zuzulassen, andererseits während des Betriebes aber eine ausreichend feste Befestigung der Lenkspindellagereinheit 4 an dem Konsolenteil 2 zu gewährleisten, ist bei dieser Lenksäule, wie an sich bekannt, eine Feststelleinrichtung vorgesehen, welche unter anderem den Spannbolzen 7 und den Betätigungshebel 19 umfasst. Natürlich sind auch motorische Betätigungen der Feststelleinrichtung denkbar. In solchen Fällen kann dann auf den Betätigungshebel 19 verzichtet werden. Feststelleinrichtungen mit Spannbolzen 7 für verstellbare Lenksäulen 1 sind beim Stand der Technik in einer Vielzahl von Ausgestaltungsformen bekannt. Die hier gezeigten Ausführungsbeispiele dienen lediglich als Veranschaulichung einer von vielen verschiedenen möglichen Varianten, wie das Spannen und Entspannen der Feststelleinrichtung von statten gehen kann.

Im gezeigten Ausführungsbeispiel ist eine Nockenplatte 25 drehfest mit dem Betätigungshebel 19 verbunden. Die Nocken dieser Nockenplatte 25 wirken mit entsprechenden Gegennocken des Klemmstücks 22 zusammen. Das Klemmstück 22 kann drehfest mit dem Konsolenteil 2 verbunden sein. Auf der gegenüberliegenden Seite ist der Spannbolzen 7 mit einer Spannmutter 23 fixiert. Auch dort befindet sich ein Klemmstück 22, das aber auch als Axialnadellager oder Axialkugellager ausgebildet sein kann, welches zwischen Spannmutter 23 und der entsprechenden Seitenwange 3 des Konsolenteils 2 angeordnet ist. Durch Drehen des Betätigungshebels 19 um die Mittenlängsachse 26 des Spannbolzens 7 wird die Nockenplatte 25 gegen das dazu benachbart angeordnete Klemmstück 22 verdreht. Je nach Stellung der beteiligten Nocken zueinander befindet sich dann die Feststelleinrichtung im geschlossenen Zustand, in dem die Lenkspindellagereinheit 4 zumindest bei den im normalen Betrieb auftretenden Kräften am Konsolenteil 2 fixiert ist. Durch entsprechendes Drehen des Betätigungshebels 19 kann dann die Feststelleinrichtung in den geöffneten Zustand gebracht werden, in dem ein Verstellen in Längsrichtung 17 der Lenkspindellagereinheit 4 relativ zum Konsolenteil 2 und damit eine Einstellung der Position des Lenkrades möglich ist. Solche Feststelleinrichtungen sind an sich bekannt und müssen hier nicht weiter erläutert werden.

Wie insbesondere in der Schnittdarstellung gemäß Fig. 2 gut zu sehen ist, weisen sowohl das Lagerteil 6, in den Lagerteilschenkeln 30, als auch die Lenkspindellagereinheit 4 jeweils Sicken auf, mit denen sie ineinander gelagert sind. Konkret ist im ersten Ausführungsbeispiel vorgesehen, dass die jeweilige Lagerteilsicke 8 in einer der Lenkspindellagereinheitsicken 9 geführt ist. Im gezeigten ersten Ausführungsbeispiel gemäß der Fig.1 und 2 weist zusätzlich auch das Konsolenteil 2 bei beiden Seitenwangen 3 jeweils eine Konsolenteilsicke 13 auf, welche im gezeigten Ausführungsbeispiel in jeweils eine der Lagerteilsicken 8 eingreift. Der Spannbolzen 7 ist erfindungsgemäß durch die Lagerteilsicken 8 und die Lenkspindellagereinheitsicken 9 hindurchgeführt. Im gezeigten Ausführungsbeispiel ist er zusätzlich auch noch durch die Konsolenteilsicken 13 hindurchgeführt.

Wie besonders gut in Fig. 2 zu sehen, ist es günstig, wenn wie in diesem Ausführungsbeispiel auch realisiert, die genannten Sicken als sogenannte Innensicken ausgeführt sind. Dies ist der Fall, wenn sie in Richtung in den Bereich 14 zwischen den Seitenwangen 3 des Konsolenteils 2 hinein vertieft ausgebildet sind.

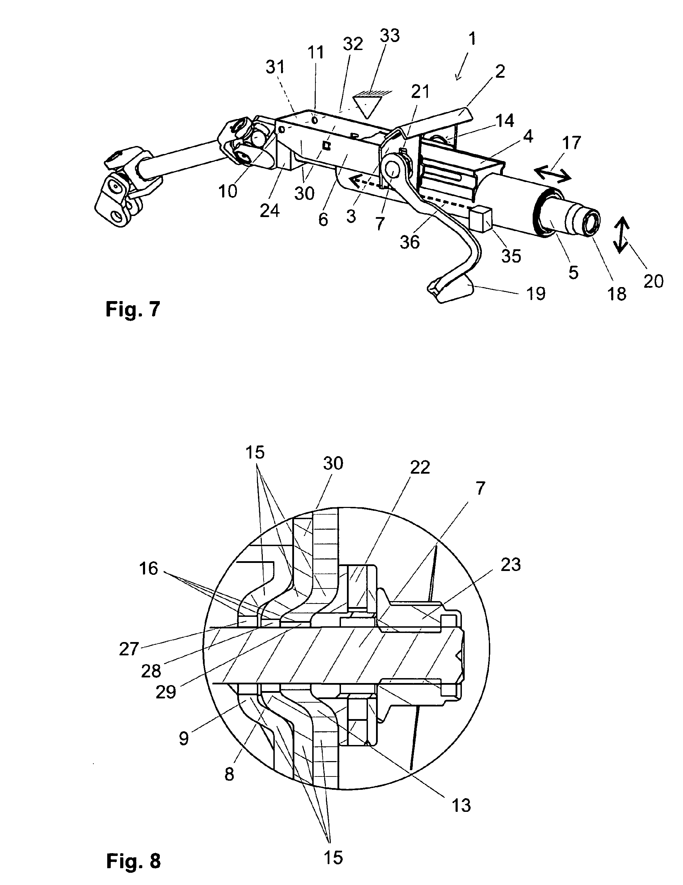

Der Bereich A aus Fig. 2 ist vergrößert noch einmal in Fig. 8 dargestellt. Hier ist besonders gut zu sehen, dass jede der Sicken 6, 9 und 13 jeweils zwei Seitenwände 15 aufweist, welche jeweils mittels eines Sickengrundes 16 miteinander verbunden sind. Der Spannbolzen 7 durchdringt jeweils den Sickengrund 16 der genannten Sicken 8, 9 und 13. Die hierzu notwendige Aussparung bzw. Öffnung ist günstigerweise nur so groß gewählt, dass noch seitliche Ränder des Sickengrundes 16 vorhanden sind.

Dies ermöglicht eine höhere Steifigkeit bei der Anlage der korrespondierenden Sicken, da dadurch in Richtung der Mittenlängsachse 26 des Spannbolzens 7 Kräfte besonders gut übertragen werden können. Die Seitenwände 15 und hier auch die Sickengründe 16 der jeweils benachbart zueinander liegenden Sicken 8, 9 und 13 liegen flächig aneinander an. Sie sind symmetrisch bezüglich der Mittenlängsachse 26 des Spannbolzens 7 angeordnet und weisen im Sinne eines optimalen aneinander Anliegens eine geometrisch ähnliche Gestalt auf. Im gezeigten Ausführungsbeispiel weisen die jeweils in die Konsolenteilsicken 13 von außen eingreifenden Klemmstücke 22 entsprechend der Sickenvertiefung ausgeformte Vorsprünge auf, mit denen sie in die Konsolenteilsicken 13 eingreifen. Durch das Hindurchführen des Spannbolzens 26 direkt durch die Sicken 8, 9 und hier auch 13 wirken die Spannkräfte des Spannbolzens 7 direkt auf die genannten Sicken ein, womit eine gleichermaßen einfache wie auch effektive Bauweise und Kraftübertragung realisiert wird. Weiters ist darauf hinzuweisen, dass durch diese Konstruktion eine sehr kompakte Bauweise möglich ist, indem der Abstand zwischen dem Spannbolzen 7 und der Lenkspindel 5 sehr gering gehalten werden kann.

Im ersten Ausführungsbeispiel weisen die Lenkspindellagereinheitsicken 9 jeweils ein Langloch 27 auf, durch die der Spannbolzen 7 hindurchgeführt ist. Durch dieses in Längsrichtung 17 der Lenkspindel 5 längserstreckte Langloch 27 ist es möglich, die Lenkspindellagereinheit 4 in den Längsrichtungen 17 relativ zum Konsolenteil 2 zu verstellen.

Mit Vorteil ist das Langloch 27 in der Lenkspindellagereinheit 4 breiter als der Durchmesser des Lochs 28 im Lagerteil 6. Mit Vorteil ist der Durchmesser des Lochs 29 im Konsolenteil 2 kleiner als der Durchmesser des Lochs 28 im Lagerteil 6. Auf diese Weise kann der Verschleiß gemindert werden. Es ist auch denkbar und möglich zur Darstellung einer größeren Verstelllänge, das Loch 29 als Langloch auszubilden. Dann wäre die Breite des Langlochs anstelle der Durchmesser des Lochs 29 als Maß für die o.g. Vergleiche anzusetzen.

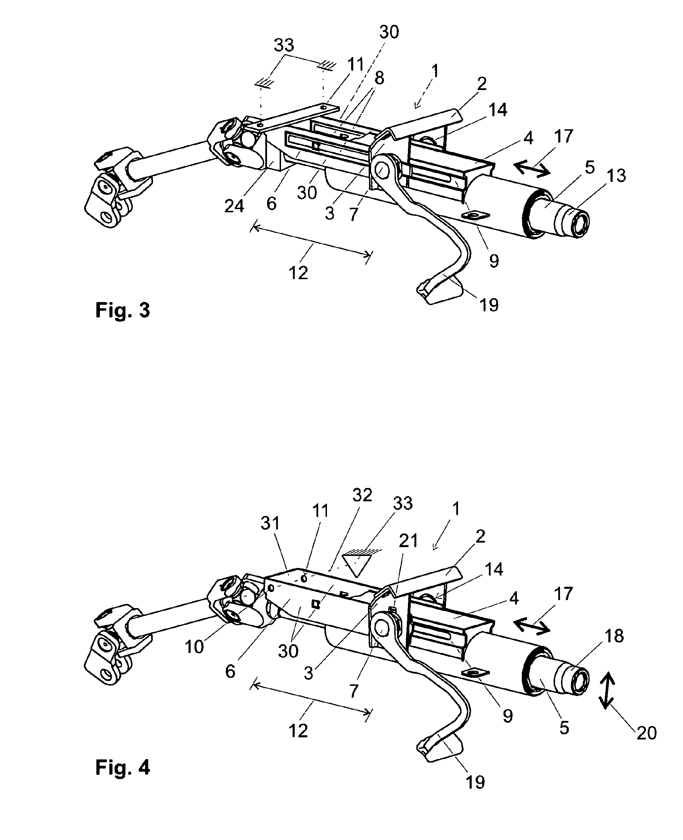

Im ersten Ausführungsbeispiel sind die Lagerteilsicken 8 und die Konsolenteilsicken 13 nicht längserstreckt ausgebildet. Durch die Längserstreckung 12 des Lagerteils 6 und die in Längsrichtung 17 vom Spannbolzen 7 entfernt realisierte Anordnung der Lagerteilbefestigung 11 wird eine sehr verwindungssteife und spielarme Lagerung der Lenkspindellagereinheit 4 erreicht. Die Verwindungssteifigkeit der Konstruktion kann noch weiter erhöht werden, indem man in einer Abwandlung des ersten Ausführungsbeispiels, wie sie in Fig. 3 dargestellt ist, auch die Lagerteilsicken 8 längserstreckt ausführt. Hierdurch wird der Eingriff der Lagerteilsicken 8 in die Lenkspindellagereinheitsicken 9 in Längsrichtung 17 deutlich verlängert, was die Verwindungssteifigkeit der Gesamtkonstruktion weiter erhöht. Weiter ist in der Fig. 3 das Lenkspindellager 24 dargestellt.

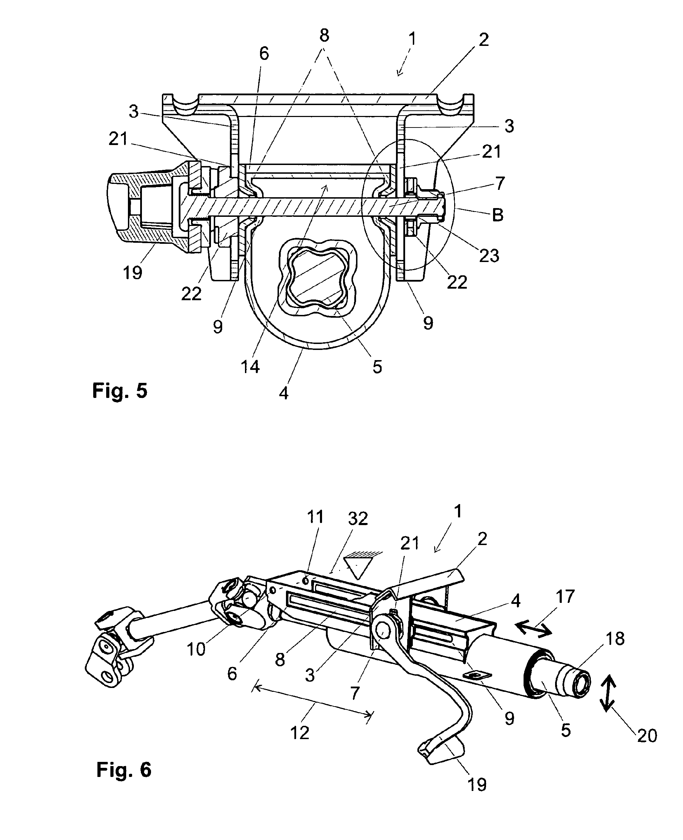

Bevor nun auf das Ausführungsbeispiel gemäß der Fig. 4 und 5 eingegangen wird, ist darauf hinzuweisen, dass in allen gezeigten Ausführungsbeispielen die jeweiligen Sickenanordnungen zweiseitig, also an beiden Seitenwangen 3 des Konsolenteils 2 realisiert sind. Dies ist im Sinne einer spielarmen steifen Konstruktion günstig, aber nicht zwingend notwendig. Es wäre auch denkbar, die entsprechenden Sickenanordnungen auf nur einer der Seitenwangen 3 zu realisieren, wobei aber erfindungsgemäß sichergestellt werden muss, dass der Spannbolzen 7 dennoch die jeweiligen Sicken durchdringt.

Im Ausführungsbeispiel gemäß Fig. 4 und 5 ist zusätzlich zur Längenverstellbarkeit der Lenksäule 1 in Längsrichtungen 17 noch eine Höhenverstellbarkeit dieser Lenksäule 1 in den Höhenrichtungen 20 vorgesehen. Hierzu ist in diesem Ausführungsbeispiel in den beiden Seitenwangen 3 des Konsolenteils 2 jeweils ein vertikal verlaufendes Langloch 21 angeordnet, in dem der Spannbolzen 7 längsverschieblich angeordnet ist. Höhen- wie auch Längenverstellung sind allerdings nur dann möglich, wenn die Feststelleinrichtung sich im geöffneten Zustand befindet. Im geschlossenen Zustand der Feststelleinrichtung sind diese Verstellmöglichkeiten zumindest beim normalen Betrieb auftretenden Kräften nicht gegeben.

Auch in der Fig. 5 ist eine Variante dargestellt, bei der in der Lenkspindellagereinheit 4 zwischen dem Spannbolzen 7 und der Lenkspindel 5 keine Wand angeordnet ist. Dadurch kann der Spannbolzen 7 sehr dicht an der Lenkspindel 5 vorbeigeführt werden. Der Bereich der Lenkspindellagereinheit, der die Lenkspindellagereinheitssicken trägt kann entweder separat gefertigt und an die Lenkspindellagereinheit gefügt, insbesondere geschweißt, werden oder die Lenkspindellagereinheit kann einteilig entsprechend ausgebildet sein.

Um auch die Höhenverstellbarkeit in Höhenrichtung 20 realisieren zu können, weist im Ausführungsbeispiel gemäß der Fig. 4 und 5 die Lagerteilbefestigung 11 des Lagerteils 6 ein Schwenkgelenk 10 auf. Das Lagerteil 6 kann um dieses Schwenkgelenk 10 zusammen mit der Lenkspindellagereinheit 4 um die Schwenkachse 32 verschwenkt werden, wenn eine Höhenverstellung durchgeführt wird. Ein weiterer Unterschied zum ersten Ausführungsbeispiel besteht darin, dass bei dieser Variante eine Konsolenteilsicke an beiden Seitenwangen 3 entfällt. In den beiden Seitenwangen sind beidseitig die genannten Langlöcher 21 vorgesehen. In diesem Ausführungsbeispiel weisen die Klemmstücke 22 entsprechend auch keine Nasen auf, mit denen sie in die Sicken eingreifen würden. Trotzdem ist erfindungsgemäß vorgesehen, dass die Lagerteilsicken 8 in den Lenkspindellagereinheitsicken 9 anliegen und der Spannbolzen 7 durch diese Sicken hindurchtritt. Abgesehen von den genannten Unterschieden ist das Ausführungsbeispiel gemäß der Fig. 4 und 5 im Wesentlichen so wie das erste Ausführungsbeispiel ausgeführt, sodass sich zusätzliche Erläuterungen hierzu erübrigen.

Fig. 6 zeigt eine abgewandelte Ausführungsform des Ausführungsbeispiels gemäß der Fig. 4 und 5, indem hier wiederum auch die Lagerteilsicken 8 in Längsrichtung 17 längserstreckt ausgeführt sind. Der hierdurch erzielbare Effekt ist derselbe wie bei der Variante gemäß Fig. 3.

Fig. 7 zeigt eine Abwandlung der Ausführungsform, wie sie in Fig. 4 dargestellt ist, bei der ein Lenkspindellager 24 in der Nähe der Schwenkachse 32 vorgesehen ist. Weiter ist in dieser Darstellung auch das Lenkradschloss 35 schematisch veranschaulicht, das auch in allen anderen Ausführungsformen enthalten sein kann. Die gestrichelte Linie 36 veranschaulicht, wie in vorteilhafter Weise das Lenkradschloss 35 vorbei an den Lagerteilschenkeln 30 und den Seitenwangen 3 bewegt werden kann, insbesondere im Crashfall. Dadurch kann der Crashweg verlängert werden. Weiterhin können auch weitere, hier nicht dargestellte, Zusatzelemente, wie beispielsweise Abdeckplatten oder Verschalungselemente samt deren Halterungen, im Crashfall am Lagerteil 6 vorbeigeführt werden.

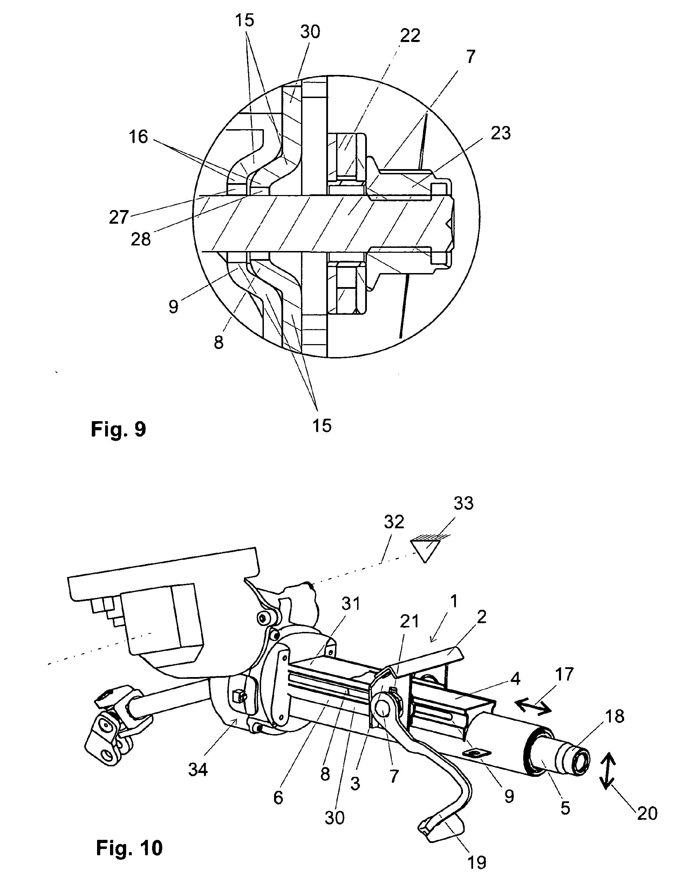

In Fig. 10 ist eine erfindungsgemäße Lenksäule dargestellt, die eine Hilfskrafteinrichtung 34 aufweist, die eine Unterstützungskraft bereitstellt, zur Entlastung vom Fahrer aufzubringenden Drehmoments zur Verdrehung der Lenkspindel. Das Lagerteil 6 ist mit dem Gehäuse der Hilfskrafteinrichtung verbunden, die in einem (nicht dargestellten) Schwenkgelenk um die Schwenkachse 32 verschwenkbar an der Halterung 33 der (nicht dargestellten) Fahrzeugkarosserie befestigt ist. Derartige Hilfskrafteinrichtungen, die alternativ zur oder in Kombination mit der Einleitung einer Unterstützungskraft auch einen Zusatzlenkwinkel (Überlagerungslenkung) bereitstellen, sind im Stand der Technik bekannt, so dass hier keine detaillierte Darstellung erforderlich ist. Die Verbindung der Hilfskrafteinrichtung mit der Lenksäule über das Lagerteil 6 ist jedoch besonders vorteilhaft, da mit sehr geringem Aufwand eine sehr steife Anordnung ermöglicht wird. Auch ist die Kombinierbarkeit von verschiedenen Lenksäulen mit verschiedenen Hilfskrafteinrichtungen sehr flexibel, so dass besonders gut eine Gleichteilstrategie umgesetzt werden kann.

Soweit anwendbar sind alle in den einzelnen Ausführungsformen gezeigten Merkmale untereinander frei kombinierbar ohne den Bereich der Erfindung zu verlassen.

**Legende zu den Hinweisziffern:**

| | | | |
|---|---|---|---|
| 1 | Lenksäule | 27 | Langloch |
| 2 | Konsolenteil | 28 | Loch |
| 3 | Seitenwange | 29 | Loch |
| 4 | Lenkspindellagereinheit | 30 | Lagerteilschenkel |
| 5 | Lenkspindel | 31 | Lagerteilboden |
| 6 | Lagerteil | 32 | Schwenkachse |
| 7 | Spannbolzen | 33 | Halterung |
| 8 | Lagerteilsicke | 34 | Hilfskrafteinrichtung |
| 9 | Lenkspindellagereinheitsicke | 35 | Lenkradschloss |
| 10 | Schwenkgelenk | | |
| 11 | Lagerteilbefestigung | | |
| 12 | Länge | | |
| 13 | Konsolenteilsicke | | |
| 14 | Bereich | | |
| 15 | Seitenwand | | |
| 16 | Sickengrund | | |
| 17 | Längsrichtung | | |
| 18 | Lenkradanschluss | | |
| 19 | Betätigungshebel | | |
| 20 | Höhenrichtung | | |
| 21 | Langloch | | |
| 22 | Klemmstück | | |
| 23 | Spannmutter | | |
| 24 | Lenkspindellager | | |
| 25 | Nockenplatte | | |
| 26 | Mittenlängsachse | | |

## Patentansprüche

1. Lenksäule (1) für ein Kraftfahrzeug mit einem, zur Befestigung der Lenksäule (1) an einer Karosserie des Kraftfahrzeugs vorgesehenen Konsolenteil (2) und einer, zwischen zumindest zwei Seitenwangen (3) des Konsolenteils (2) gelagerten Lenkspindellagereinheit (4) zur drehbaren Lagerung einer Lenkspindel (5) der Lenksäule (1), wobei zwischen den Seitenwangen (3) des Konsolenteils (2) und der Lenkspindellagereinheit (4) ein Lagerteil (6) angeordnet ist und ein Spannbolzen (7) der Lenksäule (1) die Seitenwangen (3) des Konsolenteils (2) und das Lagerteil (6) und die Lenkspindellagereinheit (4) durchdringt und das Lagerteil (6) zumindest eine Lagerteilsicke (8) und die Lenkspindellagereinheit (4) zumindest eine Lenkspindellagereinheitsicke (9) aufweist und die Lagerteilsicke (8) zumindest bereichsweise flächig an der Lenkspindellagereinheitsicke (9) anliegt, **dadurch gekennzeichnet, dass** der Spannbolzen (7) das Lagerteil (6) in der Lagerteilsicke (8) und die Lenkspindellagereinheit (4) in der Lenkspindellagereinheitsicke (9) durchdringt.

2. Lenksäule (1) nach Anspruch 1, **dadurch gekennzeichnet, dass** das Lagerteil (6) an zumindest einem, vom Spannbolzen (7) distanzierten Ort eine fixe oder ein Schwenkgelenk (10) bildende Lagerteilbefestigung (11) zur Befestigung des Lagerteils (6) an der Karosserie des Fahrzeugs oder am Konsolenteil (2) aufweist.

3. Lenksäule (1) nach Anspruch 2, **dadurch gekennzeichnet, dass** die Entfernung zwischen Spannbolzen (7) und Lagerteilbefestigung (11) zumindest der halben vorzugsweise zumindest dreiviertel der, Länge (12) des Lagerteils (6) entspricht.

4. Lenksäule (1) nach einem der Ansprüche 1 bis 3, **dadurch gekennzeichnet, dass** die Seitenwangen (3) des Konsolenteils (2) jeweils zumindest eine Konsolenteilsicke (13) aufweisen und der Spannbolzen (7) die Seitenwangen (3) in der Konsolenteilsicke (13) durchdringt und die Konsolenteilsicke (13), vorzugsweise auf zwei einander gegenüberliegenden Seiten des Spannbolzens (7), zumindest bereichsweise flächig an der Lagerteilsicke (8) anliegt.

5. Lenksäule (1) nach einem der Ansprüche 1 bis 4, **dadurch gekennzeichnet, dass** die Lagerteilsicke (8) und die Lenkspindellagereinheitsicke (9) und soweit vorhanden auch die Konsolenteilsicke (13) als in Richtung in den Bereich (14) zwischen den Seitenwangen (3) des Konsolenteils (2) hinein vertiefte Si-cken ausgebildet sind.

6. Lenksäule (1) nach einem der Ansprüche 1 bis 5, **dadurch gekennzeichnet, dass** die Lagerteilsicke (8) auf zwei einander gegenüberliegenden Seiten des Spannbolzens (7) zumindest bereichsweise flächig, oder alternativ zumindest bereichsweise linienförmig, an der Lenkspindellagereinheitsicke (9) anliegt.

7. Lenksäule (1) nach einem der Ansprüche 1 bis 6, **dadurch gekennzeichnet, dass** die Lagerteilsicke (8) und/oder die Lenkspindellagereinheitsicke (9) und/oder die gegebenenfalls vorhandene Konsolenteilsicke (13) längserstreckt ausgebildet ist bzw. sind.

8. Lenksäule (1) nach einem der Ansprüche 1 bis 7, **dadurch gekennzeichnet, dass** die Lenkspindellagereinheit (4) zur Bereitstellung einer Längsverstellbarkeit der Lenksäule (1) in Längsrichtung (17) der Lenkspindel (5) verschiebbar im Lagerteil (6) gelagert ist.

9. Lenksäule (1) nach einem der Ansprüche 1 bis 8, **dadurch gekennzeichnet, dass** das Lagerteil (6) zur Bereitstellung einer Höhenverstellbarkeit der Lenksäule (1) schwenkbar gelagert ist.

10. Lenksäule (1) nach einem der Ansprüche 1 bis 9, **dadurch gekennzeichnet, dass** die Lagerteilsicke (8) und die Lenkspindellagereinheitsicke (9) und soweit vorhanden auch die Konsolenteilsicke (13) jeweils Seitenwände (15) und jeweils einen die Seitenwände (15) miteinander verbindenden Sickengrund (16) aufweisen, wobei die Lagerteilsicke (8) und die Lenkspindellagereinheitsicke (9) und soweit vorhanden auch die Konsolenteilsicke (13) mit den Seitenwänden (15), vorzugsweise paarweise, aneinander anliegen, vorzugsweise zumindest im geschlossenen Zustand einer Feststelleinrichtung der Lenksäule, mit der die Lenkspindellagereinheit (4) in ihrer Position gegenüber dem Konsolenteil fixiert ist.

## Claims

1. A steering column (1) for a motor vehicle, having a bracket part (2) for securing the steering column (1) to a bodywork of the motor vehicle and having a steering shaft bearing unit (4), mounted between at least two lateral cheeks (3) of the bracket part (2), for the rotatable mounting of a steering shaft (5) of the steering column (1), wherein a bearing part (6) is arranged between the lateral cheeks (3) of the bracket part (2) and the steering shaft bearing unit (4) and a clamping bolt (7) of the steering column (1) passes through the lateral cheeks (3) of the bracket part (2) and the bearing part (6) and the steering shaft bearing unit (4) and the bearing part (6) has at least one bearing part channel (8) and the steering shaft bearing unit (4) has at least one steering shaft bearing unit channel (9) and at least regions of the bearing part channel (8) rest surface to surface against the steering shaft bearing unit channel (9), **characterized in that** the clamping bolt (7) passes through the bearing part (6) in the bearing part channel (8) and the steering shaft bearing unit (4) in the steering shaft bearing unit channel (9).

2. A steering column (1) according to claim 1, **characterized in that** at at least one site at a distance from the clamping bolt (7), the bearing part (6) has a bearing part attachment (11), which is fixed or forms a swivel joint (10), to secure the bearing part (6) to the bodywork of the vehicle or to the bracket part (2).

3. A steering column (1) according to claim 2, **characterized in that** the distance between clamping bolt (7) and bearing part attachment (11) corresponds to at least half, preferably at least three quarters, of the length (12) of the bearing part (6).

4. A steering column (1) according to any one of Claims 1 to 3, **characterized in that** the lateral cheeks (3) of the bracket part (2) each have at least one bracket part channel (13) and the clamping bolt (7) passes through the lateral cheeks (3) in the bracket part channel (13) and at least regions of the bracket part channel (13) rest surface to surface against the bearing part channel (8), preferably on two facing sides of the clamping bolt (7).

5. A steering column (1) according to any one of claims 1 to 4, **characterized in that** the bearing part channel (8) and the steering shaft bearing unit channel (9) and, if present, also the bracket part channel (13) are in the form of channels recessed in a direction into the region (14) between the lateral cheeks (3) of the bracket part (2).

6. A steering column (1) according to any one of claims 1 to 5, **characterized in that** on two facing sides of the clamping bolt (7), at least regions of the bearing part channel (8) rest against the steering shaft bearing unit channel (9) in a surface to surface manner or alternatively linearly.

7. A steering column (1) according to any one of claims 1 to 6, **characterized in that** the bearing part channel (8) and/or the steering shaft bearing unit channel (9) and/or the optionally present bracket part channel (13) is/are elongated.

8. A steering column (1) according to any one of claims 1 to 7, **characterized in that** the steering shaft bearing unit (4) is displaceably mounted in the bearing part (6) to provide longitudinal adjustability of the steering column (1) in the longitudinal direction (17) of the steering shaft (5).

9. A steering column (1) according to any one of claims 1 to 8, **characterized in that** the bearing part (6) is pivotably mounted to provide vertical adjustability of the steering column (1).

10. A steering column (1) according to any one of claims 1 to 9, **characterized in that** the bearing part channel (8) and the steering shaft bearing unit channel (9) and, if present, also the bracket part channel (13) each have lateral walls (15) and a channel base (16) connecting the lateral walls (15) to one another, wherein the bearing part channel (8) and the steering shaft bearing unit channel (9) and, if present, also the bracket part channel (13) rest against one another, preferably in pairs, with the lateral walls (15), preferably at least in the closed state of a steering column securing device with which the steering shaft bearing unit (4) is fixed in its position with regard to the bracket part.

## Revendications

1. Colonne de direction (1) pour un véhicule automobile, comportant un élément de console (2), prévu pour la fixation de la colonne de direction (1) à une carrosserie du véhicule automobile, et un ensemble formant palier (4), qui est monté entre au moins deux flasques (3) de l'élément de console (2) et qui est destiné au montage rotatif d'un arbre de direction (5) de la colonne de direction (1), un élément de palier (6) étant disposé entre les flasques (3) de l'élément de console (2) et de l'ensemble formant palier (4), et un boulon de serrage (7) de la colonne de direction (1) traversant les flasques (3) de l'élément de console (2) et l'élément de palier (6) et l'ensemble formant palier (4), et l'élément de palier (6) comportant au moins une gorge (8) d'élément de palier et l'ensemble formant palier (4) comportant au moins une gorge (9) d'ensemble formant palier, et la gorge (8) de l'élément de palier étant en appui plan au moins localement contre la gorge (9) de l'ensemble formant palier, **caractérisée en ce que** le boulon de serrage (7) traverse l'élément de palier (6) dans la gorge (8) d'élément de palier et l'ensemble formant palier (4) dans la gorge (9) d'ensemble formant palier.

2. Colonne de direction (1) selon la revendication 1, **caractérisée en ce que** l'élément de palier (6) comporte, en au moins un point écarté du boulon de serrage (7), une fixation (11) d'élément de palier fixe ou formant une articulation pivotante (10) et destinée à la fixation de l'élément de palier (6) à la carrosserie du véhicule automobile ou à l'élément de console (2).

3. Colonne de direction (1) selon la revendication 2, **caractérisée en ce que** la distance entre le boulon de serrage (7) et la fixation (11) d'élément de palier correspond au moins à la moitié, de préférence au moins aux trois quarts de la longueur (12) de l'élément de palier (6).

4. Colonne de direction (1) selon l'une quelconque des revendications 1 à 3, **caractérisé en ce que** les flasques (3) de l'élément de console (2) comportent chacune au moins une gorge (13) d'élément de console et le boulon de serrage (7) traverse les flasques (3) dans la gorge (13) d'élément de console, et ladite gorge (13) d'élément de console, de préférence sur deux côtés de part et d'autre du boulon de serrage (7), est en appui plan au moins localement contre la gorge (8) d'élément de palier.

5. Colonne de direction (1) selon l'une quelconque des revendications 1 à 4, **caractérisée en ce que** la gorge (8) d'élément de palier et la gorge (9) d'ensemble formant palier et aussi, pour autant qu'elle existe, la gorge (13) d'élément de console sont réalisées sous forme de gorges évidées vers l'intérieur en direction de la zone (14) entre les flasques (3) de l'élément de console (2).

6. Colonne de direction (1) selon l'une quelconque des revendications 1 à 5, **caractérisée en ce que** la gorge (8) d'élément de palier est plane au moins localement sur deux côtés de part et d'autre du boulon de serrage (7) ou, en alternative, est en appui linéaire au moins localement contre la gorge (9) d'ensemble formant palier.

7. Colonne de direction (1) selon l'une quelconque des revendications 1 à 6, **caractérisée en ce que** la gorge (8) d'élément de palier et/ou la gorge (9) d'ensemble formant palier et/ou la gorge (13) d'élément de console, éventuellement existante, est ou sont réalisée(s) sous forme allongée.

8. Colonne de direction (1) selon l'une quelconque des revendications 1 à 7, **caractérisée en ce que** l'ensemble formant palier (4) est monté mobile dans l'élément de palier (6) en vue d'une possibilité de réglage en longueur de la colonne de direction (1) dans le sens longitudinal (17) de l'arbre de direction (5).

9. Colonne de direction (1) selon l'une quelconque des revendications 1 à 8, **caractérisée en ce que** l'élément de palier (6) est monté pivotant en vue d'une possibilité de réglage en hauteur de la colonne de direction (1).

10. Colonne de direction (1) selon l'une quelconque des revendications 1 à 9, **caractérisée en ce que** la gorge (8) d'élément de palier et la gorge (9) d'ensemble formant palier et aussi, pour autant qu'elle existe, la gorge (13) d'élément de console comportent chacune des parois latérales (15) et chacune un fond (16) reliant les parois latérales (15) l'une à l'autre, la gorge (8) d'élément de palier et la gorge (9) d'ensemble formant palier et aussi, pour autant qu'elle existe, la gorge (13) d'élément de console étant en appui avec les parois latérales (15), de préférence par paires, les unes contre les autres, de préférence au moins dans la position fermée d'un dispositif d'immobilisation de la colonne de direction, par lequel l'ensemble formant palier (4) de l'arbre de direction est immobilisé dans sa position par rapport à l'élément de console.
